# EUROPÄISCHE PATENTSCHRIFT

(11) **EP 1 420 341 B1**
(45) Veröffentlichungstag und Bekanntmachung des Hinweises auf die Patenterteilung: **11.03.2009**
(21) Anmeldenummer: 03026164.8
(22) Anmeldetag: 14.11.2003
(51) Int. Cl.: G06F 9/46

(54) **Verfahren zur Steuerung eines Automatisierungssystems**
Process for operating an automatisation system
Procédé d'actionnement d'un système d'automatisation

(30) Priorität: 14.11.2002 DE 10253155
(43) Veröffentlichungstag der Anmeldung: 19.05.2004
(73) Patentinhaber: SIEMENS AKTIENGESELLSCHAFT, 80333 München (DE)
(72) Erfinder: Laforsch, Jürgen, 77815 Bühl (DE)

(56) Entgegenhaltungen:
- EP-A- 0 764 901
- US-A- 5 812 844

## Beschreibung

Die Erfindung betrifft ein Verfahren zur Steuerung eines Automatisierungssystems zur Verringerung der Anzahl der Taskwechsel bei asynchronen Ereignissen, bei dem von einem Scheduler Tasks zur Bearbeitung durch einen Prozessor gestartet werden und ein extern auftretendes Ereignis von einer Interrupt Service Routine zu einer Meldung verarbeitet wird, die dem Scheduler zugeführt wird, die von einer Interrupt Service Routine erzeugten Meldungen in einer Warteschlange zwischengespeichert werden und bei jedem Start des Schedulers in der Warteschlange befindliche Meldungen an die zugehörigen Tasks verteilt werden und die Task mit der höchsten Priorität vom Scheduler gestartet wird.

Automatisierungssysteme werden bspw. in der chemischen Industrie zur Steuerung von chemischen Prozessen eingesetzt oder auch im Maschinenbau zur Steuerung von Fertigungsanlagen.

Aus der EP 0.764 901 A ist ein Interruptbehandlungssystem eines Betriebssystems bekannt, mit Interrupt Service Routinen (ISR), die den zeitkritischen Teil einer Interruptbehandlung durchführen, und Interruptprozeduren, die den zeitunkritischen Teil einer Interruptbehandlung durchführen, wobei eine Interrupt Service Routine dem Betriebssystem eine Mitteilung über eine im Rahmen einer Interruptbehandlung noch aufzurufende Interruptprozedur sendet und das Betriebssystem die auf diese Weise mitgeteilten Interruptprozeduren erst dann aufruft, wenn keine Interrupt Service Routinen mehr zur Bearbeitung anstehen.

Aus der US 5 812 844 ist ein Verfahren bekannt, wie eine geeignete Verzahnung von periodisch auftretenden Interrupts derart erfolgen kann, dass die hiermit gestarteten Threads möglichst ohne Unterbrechung nach ihrer Dringlichkeit bearbeitet werden können.

Automatisierungssysteme sind typischerweise als Multitasking-Systeme aufgebaut, so dass verschiedene Teilaufgaben mit unterschiedlicher Priorität bearbeitet werden können. Eine Teilaufgabe wird auch als Task bezeichnet. Die Tasks stellen Aufgabenfolgen von Maschinenbefehlen dar, die von einem Prozessor bearbeitet werden. In einem Taskablaufplan wird festgelegt, wann welche Task ausgeführt wird, dabei werden die den Tasks zugewiesenen Prioritäten berücksichtigt. Tasks erhalten bspw. Meldungen als Startereignisse mit Informationen oder Daten bspw. von externen Sensoren oder Messwertgebern oder intern von anderen Tasks. Wenn eine Task eine Meldung erhalten hat und die höchste Priorität in der Reihenfolge der abzuarbeitenden Tasks aufweist, wird sie vom Scheduler aufgerufen und vom Prozessor bearbeitet. Der Scheduler ist ein Programmteil, der die Tasks dem Prozessor zur Bearbeitung zuteilt.

Neben den Tasks, die von einem Scheduler aufgrund eines Startereignisses gestartet werden, gibt es Interrupt Service Routinen (ISR), die i.a. aufgrund eines externen Ereignisses gestartet und mit einer höheren Priorität als die Task bearbeitet werden.

Die Interrupt Service Routinen (ISR) dienen dazu, ein externes Ereignis mit geringer Zeitverzögerung zu erfassen und eine erste Vorverarbeitung durchzuführen. Diese externen Ereignisse treten asynchron auf, d. h. unabhängig vom Ende einer bearbeiteten Task.

Ein externes Ereignis kann bspw. das Ansprechen eines Überlaufmesswertfühlers sein. Die Vorverarbeitung kann z. B. das Einstellen einer Schnittstelle, eine Zeitstempelung oder die Bereitstellung eines neuen Empfangspuffers für weitere Ereignisse umfassen. Die Interrupt Service Routinen (ISR) erzeugen ein Startereignis in Form einer Meldung für eine Task, so dass mit diesem Startereignis die Task vom Scheduler gestartet werden kann und somit schnell vom Prozessor bearbeitet werden kann.

Automatisierungssysteme sind häufig redundant aufgebaut und umfassen dazu mindestens zwei Teilsysteme, wobei die Teilsysteme jeweils mindestens einen Prozessor und zugeordnete Ereignisspeicher enthalten und über Kommunikationsleitungen miteinander gekoppelt sind. Zur Steuerung eines Prozesses werden in beiden Teilsystemen weitestgehend gleiche Teilaufgaben ausgeführt, um bei einem Ausfall eines Teilsystems den Prozess ohne Verzögerung mit dem anderen Teilsystem fortzusetzen. Dazu müssen die Teilsysteme regelmäßig synchronisiert werden. Zur Synchronisation der Teilsysteme werden Synchronisationsverfahren eingesetzt, wobei ein Automatisierungssystem taktsynchron oder ereignissynchron arbeiten kann.

Diese redundant aufgebauten Automatisierungssysteme werden auch als hochverfügbar bezeichnet. Hochverfügbare Automatisierungssysteme werden für Prozesssteuerungen bspw. in der chemischen Industrie eingesetzt, aber auch in der verarbeitenden Industrie und im Maschinenbau. Sie sind insbesondere dort notwendig, wo ein Stillstand oder Abbruch der Produktion sehr teuer ist oder für die beteiligten Personen oder die Umwelt gefährlich sein könnte.

Da externe Ereignisse, wie das Überschreiten eines Füllstandes oder das Ansprechen eines Mikrotasters, sowohl bei einfachen Automatisierungssystemen als auch bei hochverfügbaren Automatisierungssystemen asynchron während der Bearbeitung der Tasks auftreten, wird die aktuelle Bearbeitung der Task durch die Interrupt Service Routine unterbrochen. Das asynchrone Ereignis wird von der Interrupt Service Routine zu einer Meldung verarbeitet, die dem Scheduler zugeführt wird. Dieser unterbricht die Bearbeitung der bisher ausgeführten Task und startet die Task, die die Meldung der Interrupt Service Routine erhalten hat. Wenn die Interrupt Service Routine (ISR) die Bearbeitung abgeschlossen hat, startet der Scheduler ggf. eine Task mit höherer Priorität, falls diese Task eine Meldung von der ISR empfangen hat. Treten nun innerhalb einer kurzen Zeit mehrere asynchrone Ereignisse auf, so führt dies zu häufigen Starts des Schedulers und damit i. a. zu häufigen Taskwechseln. Ein Taskwechsel kostet jedes Mal eine nicht zu vernachlässigende Taskwechselzeit, die gerade in Automatisierungssystemen, die unter Echtzeitbedingungen laufen, unerwünscht ist.

Bei hochverfügbaren Automatisierungssystemen muss vor jedem Taskwechsel eine Synchronisation der Teilsysteme durchgeführt werden, so dass insbesondere bei derartigen Automatisierungssystemen häufige Taskwechsel die Echtzeiterfordernisse beeinträchtigen.

In bisher bekannten Systemen wird das Problem häufiger Taskwechsel z. B. dadurch gelöst, dass die Interrupts für eine gewisse Zeit gesperrt werden. Dadurch kann es jedoch vorkommen, dass eine in Echtzeit erforderliche Erstbearbeitung eines asynchronen Ereignisses bei der Ereigniserfassung hinausgezögert wird und im Extremfall Ereignisse nicht rechtzeitig erfasst und bearbeitet werden können und möglicherweise verloren gehen können.

Aufgabe ist es deshalb, ein Verfahren zu schaffen, so dass insgesamt Performance-Vorteile, insbesondere bei asynchronen Ereignissen, erzielt werden.

Die Aufgabe wird durch die Merkmale des Anspruchs 1 gelöst.

Der Erfindung liegt der Gedanke zugrunde, die Interrupts nicht zu sperren, um häufige Taskwechsel zu unterbinden, so dass die Interrupt Service Routinen asynchrone Ereignisse zeitoptimal erfassen und vorverarbeiten können. Bei der erfindungsgemäßen Ausgestaltung stellt die Interrupt Service Routine (ISR) diese Information aber nicht direkt dem Scheduler zur Verfügung, sondern es erfolgt eine Zwischenspeicherung der Meldungen in einer separaten Warteschlange. Auf diese Weise können mehrere asynchron auftretende Ereignisse erfasst werden, zu entsprechenden Meldungen weiterverarbeitet und zeitlich korrekt in der Warteschlange Q zwischengespeichert werden. Damit wird die Bearbeitung der laufenden "normalen" Tasks nur für die Durchführung der Erfassung des externen Ereignisses unterbrochen. Die momentan bearbeitete Task wird jedoch vorteilhafterweise danach weiterbearbeitet.

Um trotzdem eine deterministische Reaktionszeit auf asynchrone Ereignisse zu erreichen, wird in einem vorgebbaren Zeitraster vom Scheduler die Warteschlange überprüft, um nachzusehen, ob zwischenzeitlich asynchrone Ereignisse eingetroffen sind. Damit definiert das Zeitraster die maximale Reaktionszeit auf externe Ereignisse. Ist kein asynchrones Ereignis eingetroffen, so wird die Bearbeitung der laufenden Task fortgesetzt. Liegen ein oder mehrere asynchrone Ereignisse in Form von Meldungen in der Warteschlange vor, so werden diese, wenn die Bearbeitung einer Task abgeschlossen ist und der Scheduler gestartet wird, vom Scheduler an die entsprechenden Tasks verteilt. Anschließend startet der Scheduler die Task mit der höchsten Priorität, die eine Meldung von der ISR empfangen hat.

Auf diese Weise wird die Anzahl der Taskunterbrechungen durch eine Task mit höherer Priorität reduziert und die Gesamtlaufzeit des Betriebssystems zu kleineren Zeiten hin optimiert. Mit der Vorgabe des Zeitrasters kann die Taskunterbrechung an die technologischen Anforderungen angepasst werden. Dadurch erhöht sich die Deterministik des Automatisierungssystems.

Falls nur die IDLE-Task läuft, wird das Zeitraster deaktiviert und ein asynchrones Ereignis kann über den Scheduler sofort die zugehörige Task mit minimalem Zeitverzug starten.

Das beschriebene Verfahren eignet sich für Betriebssysteme mit einem Scheduling gemäß kooperativem, präemptivem und Time-Slice Verfahren. Das Time-Slice und das präemptive Scheduling werden derart überlagert, dass asynchrone Ereignisse mit kurzer Reaktionszeit erkannt und vorverarbeitet werden, z. B. die Erfassung und Zeitstempelung. Somit können ein oder u. U. mehrere asynchrone Ereignisse gesammelt und zu definierten Zeitpunkten vom Scheduler verteilt und anschließend gemäß der Priorität der Tasks weiterverarbeitet werden. Die minimale garantierte Laufzeit einer Task kann über das Zeitraster eingestellt werden, so dass das vorgebbare Zeitraster die maximale Reaktionszeit definiert.

Das beschriebene Verfahren gewinnt insbesondere in redundant laufenden Systemen einen erheblichen Performance-Gewinn. Redundant aufgebaute Automatisierungssysteme verfügen über wenigstens zwei Teilsysteme, wobei jedes Teilsystem in der Lage ist, die Aufgaben des anderen im Falle eines Ausfalls zu übernehmen. Dazu müssen die Teilsysteme ständig über den gleichen Informationsstand verfügen. Dies erfordert bspw. bei jedem Taskwechsel eine Zwangssynchronisation zwischen den Betriebssystemen der Teilsysteme zur Aufrechterhaltung des Gleichlaufs. Das Ziel, die Anzahl der Zwangssynchronisationen zu reduzieren, kann somit in vorteilhafter Weise erreicht werden.

In einem redundant laufenden Automatisierungssystem können Ereignisse jeweils einseitig und asynchron auftreten. Diese Ereignisse werden lokal gesammelt und im vorgegebenen Zeitraster zum anderen Teilsystem des redundanten Automatisierungssystems übertragen. Dort werden diese asynchronen Ereignisse vom Scheduler nach dem oben beschriebenen Verfahren eingefügt. Auf diese Weise wird die Deterministik des redundant laufenden Automatisierungssystems erhöht.

Solche einseitigen Ereignisse kann bspw. der Empfang eines Kommunikationsdienstes über eine Verbindung sein, wobei die Verbindung nur einseitig an einem Teilsystem endet. Weiter müssen Alarme von nur einseitig vorhandenen Baugruppen dem anderen Teilsystem mitgeteilt werden, ebenso müssen Alarme von dezentralen Baugruppen, die jeweils nur einkanalig angeschlossen sind, an das andere Teilsystem übertragen werden.

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Figur 1: ein Automatisierungssystem,
- Figur 2a: einen schematischen Ablauf des Verfahrens nach dem Stand der Technik,
- Figur 2b: eine zeitliche Abfolge der Bearbeitung der Ereignisse,
- Figur 3a: einen schematischen Ablauf des erfindungsgemäßen Verfahrens und
- Figur 3b: eine zeitliche Abfolge der Bearbeitung der Ereignisse.

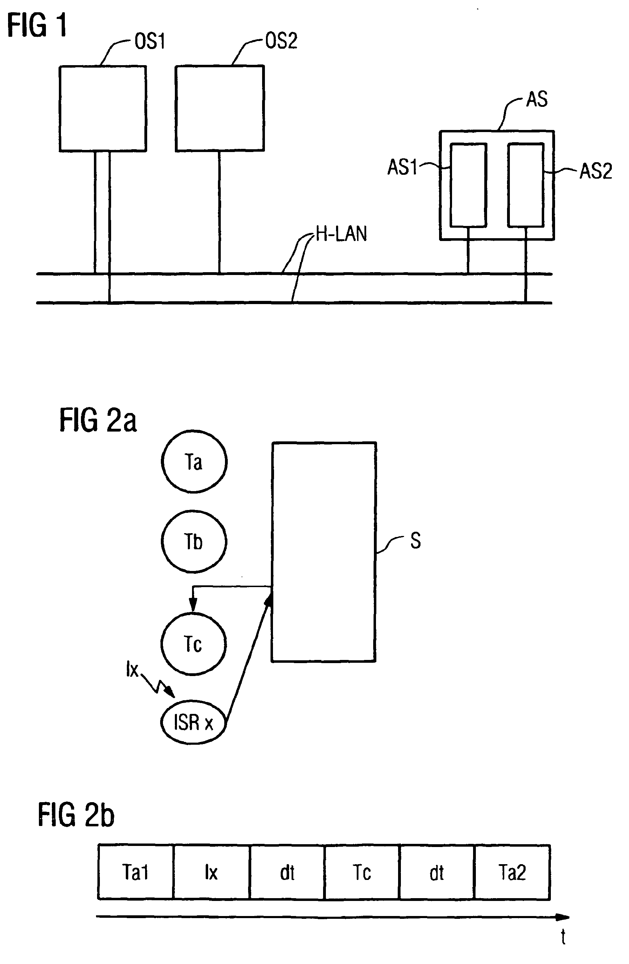

Figur 1 zeigt den Aufbau eines Automatisierungssystems AS. Ein Automatisierungssystem AS ist über ein Netzwerk H-LAN mit Bedienstationen OS1 und OS2 verbunden. Dabei ist sowohl das Netzwerk H-LAN als hochverfügbares Netzwerk ausgestaltet, als auch das Automatisierungssystem AS. Das Automatisierungssystem AS umfasst zwei Teilsysteme AS1 und AS2. Die Bedienstation OS1 ist hochverfügbar an das Netzwerk angeschlossen. Die Bedienstation OS2 ist nur einkanalig an das Netzwerk angeschlossen.

Figur 2a zeigt den schematischen Aufbau bzw. Ablauf der Tasksteuerung nach dem Stand der Technik. Die Tasks Ta-Tc werden entsprechend ihrer Priorität vom Scheduler gestartet. Jeder Task können Meldungen, sowohl interne als auch externe, zugeordnet werden. Wenn eine Meldung mit Informationen oder Daten für eine der Tasks Ta-Tc vorliegt, wird diese abhängig von ihrer Priorität vom Scheduler gestartet. Treten bei der Bearbeitung von Tasks externe Ereignisse Ix auf, wird die Bearbeitung der Task Ta durch die Interrupt Service Routine ISRx nach der Bearbeitung eines Teils Ta1 der Task Ta (Figur 2b) unterbrochen und die ISR bearbeitet das externe Ereignis Ix zu einer Meldung. Diese Meldung wird direkt vom Scheduler S der entsprechenden Task Tc zugeführt. Da diese Task Tc eine höhere Priorität aufweist, als die bisher bearbeitete Task Ta, wird ein Taskwechsel vollzogen und es wird zunächst Task Tc bearbeitet. Der Taskwechsel benötigt eine Taskwechselzeit dt. Die Bearbeitung der Task Ta wird unterbrochen. Nachdem die Task Tc bearbeitet wurde, wird vom Scheduler S wieder ein Taskwechsel vollzogen, der die Taskwechselzeit dt beansprucht, und es wird die ursprünglich bearbeitete Task Ta ab einem Teil Ta2 dieser Task Ta weiter bearbeitet.

Der oben beschriebene Ablauf ist in Figur 2b schematisch an einer Zeitachse t dargestellt.

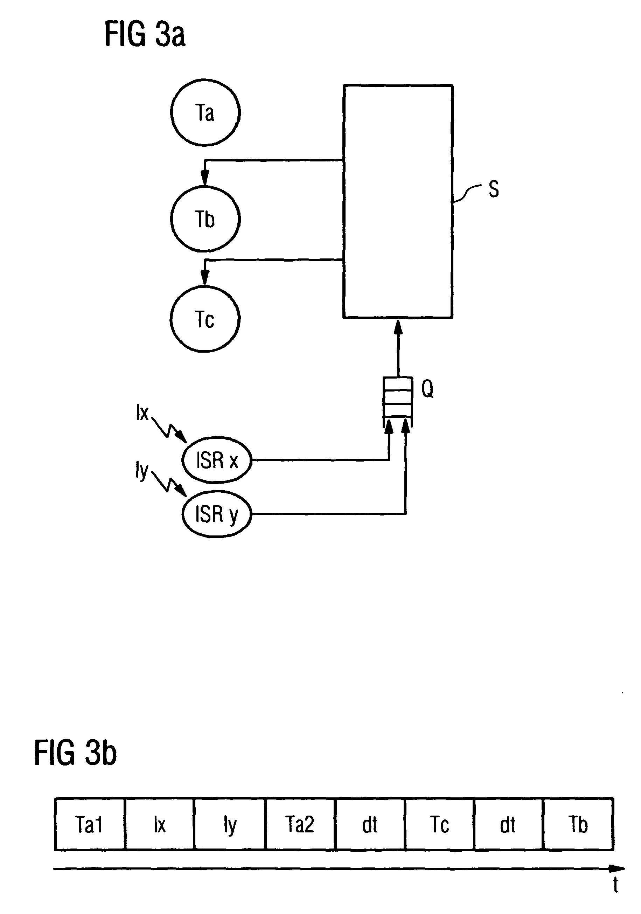

Figur 3a zeigt den schematischen Aufbau bzw. Ablauf der Tasksteuerung gemäß der vorliegenden Erfindung.

Dem Scheduler S ist hier ein Speicher, der als Warteschlange Q ausgestaltet ist, vorgeschaltet. Zuerst wird regulär die Task Ta bearbeitet. Während der Bearbeitung der Task Ta treten die externen Ereignisse Ix und Iy nach der Bearbeitung des Teils Ta1 dieser Task Ta auf, die von den ISRx und ISRy zu Meldungen vorverarbeitet werden. Im Gegensatz zum Verfahren nach Figur 2a werden diese Meldungen nicht direkt dem Scheduler S zugeführt, sondern erfindungsgemäß in der Warteschlange Q gespeichert. Somit wird zwar bei Auftreten von externen Ereignissen Prozessorzeit für die Erzeugung der Meldungen benötigt, es erfolgt aber kein unmittelbar auftretender Taskwechsel mit der zusätzlichen Taskwechselzeit.

Nachdem die Meldungen Ix und Iy in der Warteschlange Q gespeichert wurden, wird die ursprünglich bearbeitete Task Ta weiter bearbeitet. Erst nachdem diese Task Ta zu Ende bearbeitet wurde (Teil Ta2 bearbeitet), wird der Scheduler S wieder gestartet. Der Scheduler S überprüft die Warteschlange Q auf das Vorhandensein von Meldungen, die durch externe Ereignisse verursacht wurden. Die hier vorliegenden Meldungen Ix und Iy werden den zugehörigen Tasks Tb und Tc zugeführt. Der Scheduler S startet nun die Task mit der höchsten Priorität, in diesem Fall Task Tc, danach erfolgt die Bearbeitung von Task Tb.

## Patentansprüche

1. Verfahren zur Steuerung.eines Automatisierungssystems (AS) zur Verringerung der Anzahl der Taskwechsel bei asynchronen Ereignissen, bei dem von einem Scheduler (S) Tasks (Ta-Tc) zur Bearbeitung durch einen Prozessor gestartet werden und ein extern auftretendes Ereignis (Ix, Iy) von einer Interrupt Service Routine (ISR) zu einer Meldung verarbeitet wird, die dem Scheduler (S) zugeführt wird, die von einer Interrupt Service Routine (ISR) erzeugten Meldungen in einer Warteschlange (Q) zwischengespeichert werden und bei jedem Start des Schedulers (S) in der Warteschlange (Q) befindliche Meldungen an die zugehörigen Tasks (Tb, Tc) verteilt werden und die Task (Tc) mit der höchsten Priorität vom Scheduler (S) gestartet wird, **dadurch gekennzeichnet, dass** die Bearbeitung einer laufenden Task (Ta) nur für die Durchführung der Erfassung des extern auftretenden Ereignisses (Ix, Iy) unterbrochen wird und die laufende bearbeitete Task (Ta) nach Erfassung des extern auftretenden Ereignisses (Ix, Iy) weiterbearbeitet wird.

2. Verfahren nach Anspruch 1, **dadurch gekennzeichnet, dass** die Meldungen in der Warteschlange (Q) nach der Priorität sortiert werden.

3. Verfahren nach Anspruch 1 oder 2, **dadurch gekennzeichnet, dass** der Scheduler (S) in einem vorgebbaren Zeitraster gestartet wird, um die Warteschlange (Q) auf Meldungen externer Ereignisse zu überprüfen, und bei Vorliegen von externen Meldungen in der Warteschlange (Q) die Meldungen den zugehörigen Tasks (Tb, Tc) zugeordnet werden und die Task (Tc) mit der höchsten Priorität gestartet wird.

4. Verfahren nach Anspruch 1 bis 3, **dadurch gekennzeichnet, dass** bei Ablauf einer IDLE-Task das Zeitraster deaktiviert wird und der Scheduler die Warteschlange für Meldungen externer Ereignisse andauernd überwacht.

## Claims

1. Method for controlling an automation system (AS) in order to reduce the number of task changes when asynchronous events occur, wherein tasks (Ta-Tc) are started by a scheduler (S) for processing by means of a processor and an externally occurring event (Ix, Iy) is processed by an interrupt service routine (ISR) into a message that is supplied to the scheduler (S), the messages generated by an interrupt service routine (ISR) are buffered in a queue (Q) and each time the scheduler (S) is started messages contained in the queue (Q) are distributed to the associated tasks (Tb, Tc) and the task (Tc) having the highest priority is started by the scheduler (S), **characterised in that** the processing of a running task (Ta) is interrupted only to allow the recording of the externally occurring event (Ix, Iy) to be performed and processing of the running processed task (Ta) is resumed following recording of the externally occurring event (Ix, Iy).

2. Method according to claim 1, **characterised in that** the messages are sorted in the queue (Q) according to priority.

3. Method according to claim 1 or 2, **characterised in that** the scheduler (S) is started in a predefinable time pattern in order to check the queue (Q) for messages of external events, and if external messages are present in the queue (Q) the messages are assigned to the associated tasks (Tb, Tc) and the task (Tc) having the highest priority is started.

4. Method according to claim 1 to 3, **characterised in that** when an IDLE task is executed the time pattern is deactivated and the scheduler constantly monitors the queue for messages of external events.

## Revendications

1. Procédé de commande d'un système ( AS ) d'automatisation pour diminuer le nombre des changements de tâches lors d'évènements asynchrones, dans lequel on lance par un programmateur ( S ) des tâches ( Ta-Tc ) pour le traitement par un processeur et on transforme par un Interrupt Service Routine ( ISR )un événement ( Ix, Iy ) se produisant extérieurement en un message qui est envoyé au programmateur ( S ), on mémorise intermédiairement dans une file ( Q ) d'attente les messages produits par un Interrupt Service Routine ( ISR ) et à chaque lancement du programmateur ( S ) on répartit des messages se trouvant dans la file ( Q ) d'attente sur les tâches ( Tb,Tc ) associées et on lance par le programmateur ( S ) la tâche ( Tc ) ayant la priorité la plus grande,
**caractérisé en ce que** l'on n'interrompt le traitement d'une tâche ( Ta ) en cours que pour l'exécution de la détection de l'événement ( Ix,Iy ) se produisant extérieurement et on continue à traiter la tâche ( Ta ) traitée en cours après la détection de l'événement ( Ix,Iy ) se produisant extérieurement.

2. Procédé suivant la revendication 1,
**caractérisé en ce que** qu'on trie les messages de la file ( Q ) d'attente suivant la priorité.

3. Procédé suivant la revendication 1 ou 2,
**caractérisé en ce qu'**on lance le programmateur ( S ) suivant une trame de temps pouvant être prescrite pour contrôler des messages d'évènements extérieurs de la file ( Q ) d'attente et, en présence de messages extérieurs dans la file ( Q ) d'attente, on affecte les messages aux tâches ( Tb,Tc ) associées et on lance la tâche ( Tc ) ayant la priorité la plus grande.

4. Procédé suivant l'une des revendications 1 à 3,
**caractérisé en ce que**, lors du déroulement d'une tâche IDLE, on désactive la trame de temps et le programmateur contrôle en permanence les messages d'évènements extérieurs de la file d'attente.
